# EUROPÄISCHE PATENTSCHRIFT

(11) **EP 2 514 297 B1**
(45) Veröffentlichungstag und Bekanntmachung des Hinweises auf die Patenterteilung: **19.03.2014**
(21) Anmeldenummer: 12153745.0
(22) Anmeldetag: 03.02.2012
(51) Int. Cl.: A01D 41/14

(54) **Selbstfahrende Erntemaschine**
Self-propelled harvester
Moissonneuse automobile

(30) Priorität: 19.04.2011 DE 102011002158
(43) Veröffentlichungstag der Anmeldung: 24.10.2012
(73) Patentinhaber: CLAAS Selbstfahrende Erntemaschinen GmbH, 33428 Harsewinkel (DE)
(72) Erfinder: Kortenjann, Ludger, 48231 Warendorf (DE); Brand, Andreas, 33428 Harsewinkel (DE); Hovenga, Frank, 48167 Münster (DE)

(56) Entgegenhaltungen:
- EP-A1- 0 450 156
- DE-A1- 1 482 841
- DE-B- 1 237 374
- DE-U- 7 433 390
- US-A- 2 730 823

## Beschreibung

Die Erfindung betrifft eine selbstfahrende Erntemaschine mit einem Vorsatzgerät, vorzugsweise in Form eines Getreideschneidwerks oder Maispflückers, das über zumindest einen Hydraulikzylinder gegenüber einem Fahrgestell der Erntemaschine anhebbar und absenkbar ist und an das sich ein das Erntegut einem Dreschwerk oder einer Häckseltrommel zuführender Schrägförderer anschließt, wobei der Schrägförderer an einem ersten Ende über eine horizontale Schwenkachse gemeinsam mit dem Vorsatzgerät schwenkbar an der Erntemaschine geführt ist und wobei der Hydraulikzylinder einen Hubzylinder und eine gegenüber diesem in axialer Richtung verschiebbare Kolbenstange aufweist, die an ihrer Außenmantelfläche gleitend in einer Dichtung des Hubzylinders geführt ist.

Entsprechende Erntemaschinen können beispielsweise als selbstfahrende Mähdrescher oder Feldhäcksler konzipiert sein. Das im Frontbereich der Erntemaschine angeordnete Vorsatzgerät ist sowohl bei der Ausbildung der Erntemaschine als Mähdrescher als auch als Feldhäcksler an den Schrägförderer kuppelbar oder von diesem entkuppelbar, so dass es sich, bezogen auf das jeweilige Erntegut bzw. das Ernteverfahren, austauschen lässt. Es kann sich bei Mähdreschern um ein Schneidwerk für die Getreideernte oder um einen Maispflücker für die Maisernte handeln. Diese als Vorsatzgeräte zu verwendenden Einheiten lassen sich zumeist mit geringem Aufwand an den Schrägförderer an- bzw. von diesem abkuppeln. Ähnlich sind die Verhältnisse bei selbstfahrenden Feldhäckslern, bei denen unterschiedliche Vorsatzgeräte zum Mähen von Gras, zur Aufnahme von im Schwad abgelegtem Gras oder zum Schneiden und Zuführen von Maisstängeln vorgesehen sind. Da die Vorsatzgeräte zumeist eine große Arbeitsbreite aufweisen und folglich nicht mehr gemeinsam mit der Erntemaschine transportiert werden können, werden diese ebenfalls von dem Schrägförderer abgekuppelt und mit dafür vorgesehenen Transportwagen auf das nächste Feld transportiert. Darüber hinaus bezieht sich die Erfindung auch auf selbstfahrende Erntemaschinen, die stets mit dem gleichen Vorsatzgerät betrieben werden. Bei derartigen Erntemaschinen kann es auch eine Anordnung des Hydraulikzylinders geben, bei denen dieser direkt am Vorsatzgerät angreift. Eine Höheneinstellung des entsprechenden Vorsatzgerätes wird entweder manuell vorgenommen, oder es ist insbesondere bei Mähdreschern eine Sensorik vorgesehen, über welche die Schnitthöhe des im Übrigen auf Kufen geführten Getreideschneidwerks automatisch geregelt wird.

Ein selbstfahrender Mähdrescher der im Oberbegriff des Patentanspruchs 1 genannten Gattung ist aus der DE 14 82 841 C3 bekannt. Der Schrägförderer, der wahlweise mit einem Vorsatzgerät zur Ernte von Getreide oder einem solchen für die Ernte von Mais verbunden werden kann, ist um eine horizontale Achse schwenkbar am Rahmen der Erntemaschine angeordnet. An dem Ende des Schrägförderers, der dessen Eintrittsbereich umgibt, weist dieser eine Kuppeleinrichtung auf, über die der Schrägförderer mit dem Vorsatzgerät verbindbar ist. An dieser Kuppeleinrichtung greift zumindest ein Hydraulikzylinder an, der am Fahrgestellt der Erntemaschine angelenkt ist. Über diesen Hydraulikzylinder kann das entsprechende Ende des Schrägförderers während des Kuppelvorgangs in eine entsprechende Position gehoben und gesenkt werden, und zum anderen dient dieser Hydraulikzylinder zur Höheneinstellung des an den Schrägförderer angekuppelten Vorsatzgerätes sowie zum Halten desselben in einer Transportstellung. Während eines Erntevorgangs gelangen in erheblichem Maße stärkehaltige Bestandteile des Erntegutes, die sehr adhäsiv sind, auf die verchromte Oberfläche der Kolbenstange. Diese Bestandteile verbacken zumeist mit der Oberfläche und können nach einiger Zeit, d. h., nach mehrfachem Ein- und Ausfahren der Kolbenstange zur Beschädigung der zwischen dem Ende des Hubzylinders und der Kolbenstange vorgesehenen Dichtung führen. Besonders problematisch ist dabei, dass bestimmte Bereiche der Kolbenstange über die Dichtung nur selten abgestreift werden, d. h. unter Umständen nur einmal am Tag. In diesen Bereichen findet daher eine extreme Anhaftung der stärkehaltigen Bestandteile des Erntegutes statt.

Aus der EP 0 450 156 A1 ist eine Schutzvorrichtung für eine Kolbenstange eines Hydraulikzylinders an einem Bagger bekannt. Dieser Hydraulikzylinder dient zum Heben und Senken eines Planierschildes, wobei die Kolbenstange dieses Arbeitszylinders vor herabfallende Gegenstände, wie z. B. Steine und dergleichen geschützt werden soll. Zu diesem Zweck ist die Kolbenstange von einer verschiebbaren Schutzhülse umgeben, die über einen Halter und ein gabelförmiges Element unmittelbar am Lagerauge der Kolbenstange befestigt ist. Die Schutzhülse weist eine schalenartige Gestalt auf und gleitet auf einer an der Außenmantelfläche des Hubzylinders fixierten Gleitringdichtung.

Weiterhin ist aus der DE 1 237 374 C ein Schneidwerk eines Mähdreschers bekannt, das einen gegenüber einer Schneidwerksmulde verlagerbaren Mähtisch aufweist. Diese Verstellung erfolgt dabei mittels eines Hydraulikzylinders, der in Kufen des Mähtisches angeordnet ist, und dient dazu, den Abstand zwischen einem am Mähtisch vorgesehenen Mähwerk und einer Einzugsschnecke einzustellen. Durch die entsprechende Anordnung des Hydraulikzylinders soll der Raum innerhalb der Kufen ausgenutzt werden, und es soll der Hydraulikzylinder vor Verschmutzung geschützt sein.

Es ist Aufgabe der vorliegenden Erfindung eine Benetzung der Oberfläche der Kolbenstange mit stärkehaltigen Pflanzensäften des Erntegutes zu vermeiden. Ein derartiger Schutz der Kolbenstange soll mit geringem baulichen Aufwand realisiert werden.

Diese Aufgabe wird, ausgehend vom Oberbegriff des Patentanspruchs 1, in Verbindung mit dessen kennzeichnenden Merkmalen gelöst. Die darauf folgenden abhängigen Patentansprüche geben jeweils vorteilhafte Weiterbildungen der Erfindung wieder.

Gemäß dem kennzeichnenden Teil des Patentanspruchs 1 soll eine den Hydraulikzylinder zumindest auf seiner dem Boden zugewandten Seite abdeckende, als Profil ausgeführte Schutzeinrichtung am zweiten Ende des Schrägförderers oder an einer Rückwand des Vorsatzgerätes mittelbar oder unmittelbar befestigt sein, in deren Innerem der Hydraulikzylinder eine Schwenkbewegung ausführen kann. Diese Schutzeinrichtung schirmt folglich den Hydraulikzylinder beziehungsweise dessen Kolbenstange in einer Weise ab, dass Pflanzensäfte oder Pflanzenpartikel nicht mehr auf die Kolbenstange oder in den Dichtungsbereich des Hydraulikzylinders gelangen können. Somit kann eine Beeinträchtigung der Dichtfunktion der Abdichtung der Kolbenstange dauerhaft sehr wirkungsvoll vermieden werden. Die als Profil gestaltete Schutzeinrichtung ist dabei an der heb- und senkbaren Einrichtung angeordnet, nämlich bei einem austauschbaren Vorsatzgerät vorzugsweise am Schrägförderer, an dem in diesem Fall auch der Hydraulikzylinder angreift. Wenn bei einem als Getreideschneidwerk ausgebildeten Vorsatzgerät ein An- und Abkuppeln desselben nicht vorgesehen ist, wird der Hydraulikzylinder eventuell an einer Rückwand des Getreideschneidwerks angreifen. In diesem Fall wird die Schutzeinrichtung ebenfalls an dieser Rückwand fixiert sein. Das Profil soll derart gestaltet sein, dass der Hydraulikzylinder beim Anheben oder Absenken des Vorsatzgerätes eine entsprechende Schwenkbewegung gegenüber dem Hohlprofil ausführen kann. Wenn der Hydraulikzylinder in einfacher Umkehr seiner Anordnung mit seiner Kolbenstange am Rahmen oder Fahrgestell der Erntemaschine angreifen sollte, so ist die Schutzeinrichtung natürlich in diesem Bereich, in dem sich die Kolbenstange befindet, vorgesehen.

Gemäß einer weiteren Ausgestaltung der Erfindung soll die Schutzeinrichtung an einem Rahmenteil, über das der Schrägförderer mit dem Vorsatzgerät kuppelbar ist, befestigt sein. Dabei kann es sich um einen Querbalken handeln, an welchen das am Schrägförderer aufgenommene Vorsatzgerät gekuppelt wird.

Vorzugsweise kann das Profil als ein L-förmiges Profil oder als ein Hohlprofil ausgeführt sein. Das L-förmige Profil deckt die Kolbenstange respektive den Hydraulikzylinder zumindest abschnittsweise, im Wesentlichen seitlich und auf der dem Boden zugewandten Seite, ab. Dies hat den Vorteil, dass sich das Ansammeln von Erntepartikeln im Inneren des Profiles vermindert werden kann, da diese seitlich herausfallen können beziehungsweise auf einfache Weise auf Grund der seitlichen Zugänglichkeit entfernbar sind. Bei einer Ausführung als Hohlprofil können auf der Innenseite der Seitenwände im Eingangsbereich der Schutzeinrichtung Abstreifer vorgesehen sein, die ein Eindringen von Erntegutresten verhindern.

Weiterhin soll die Schutzeinrichtung die Kolbenstange über eine Länge abdecken, um die die Kolbenstange während des Erntevorgangs überwiegend über den Hydraulikzylinder vorsteht. Es handelt sich dabei um einen Bereich der Kolbenstange, der während des gesamten Erntevorgangs nicht oder kaum abgestreift wird und auf welchem sich Ablagerungen aus stärkehaltigen Bestandteilen, insbesondere von Maispflanzen, ablagern können. Das kann durch den Schutz der Kolbenstange in diesem Bereich sehr wirkungsvoll vermieden werden.

Alternativ dazu besteht aber auch die Möglichkeit, die Kolbenstange über eine entsprechend ausgebildete Schutzeinrichtung über eine Länge abzudecken, die der Länge der maximal ausgefahrenen Kolbenstange entspricht. Da die Schutzeinrichtung in diesem Fall je nach Stellung der Kolbenstange auch den Hubzylinder übergreift, wird vorgeschlagen, einen Abstand zwischen den Seitenwänden des Hohlprofils vorzusehen, der größer oder gleich einem Außendurchmesser des Hubzylinders ist.

Besonders vorteilhaft ist eine Ausbildung der Schutzeinrichtung als U-förmiges Hohlprofil, welches einen Boden und Seitenwände aufweist. Dabei soll der Boden im montierten Zustand der Schutzeinrichtung nach unten, also in Richtung der Stoppel weisen. Der Boden der Schutzeinrichtung verläuft derart, dass die Kolbenstange in ihrer maximal ausgefahrenen Position, in welcher das Vorsatzgerät maximal angehoben ist, nahezu parallel zu dem Boden des Hohlprofils verläuft. Weiterhin können die Seitenwände des U-förmigen Hohlprofils jeweils mit Versteifungssicken versehen sein, wodurch Schwingungen dieser Seitenwände während des Betriebs der Erntemaschine reduziert werden können. Gemäß einer vorteilhaften Ausgestaltung der Erfindung sollen die Seitenwände des Hohlprofils mit im Wesentlichen dreieckiger Kontur ausgebildet sein. Diese dreieckige Kontur weist dabei im Bereich der Anlenkung der Kolbenstange einen Winkel auf, der etwa dem Schwenkwinkel der Kolbenstange gegenüber dem Schrägförderer oder dem Vorsatzgerät entspricht.

Weiterhin kann an dem Schwenklager, über das die Kolbenstange am Rahmenteil angreift, eine ebenfalls schwenkbare Sicherheitsstütze geführt sein. Diese Sicherheitsstütze dient dazu, die Kolbenstange gegenüber dem Hubzylinder in einer ausgefahrenen Position zu arretieren. Eine derartige Arretierung ist während der Durchführung von Wartungs- oder Reparaturarbeiten am Schrägförderer oder am Vorsatzgerät erforderlich, da sich ansonsten bei einem Abfallen des Hydraulikdruckes in dem Hydraulikzylinder, das durch Leckagen am entsprechenden Steuerventil hervorgerufen werden kann, das Vorsatzgerät und der Schrägförderer unkontrolliert absenken. Gemäß der vorgeschlagenen Lösung soll die Schutzeinrichtung an dieser Sicherheitsstütze befestigt sein. Diese Sicherheitsstütze, die bei Nichtbenutzung am Schrägförderer festlegbar ist, weist einen gabelförmigen Fuß auf und kann soweit verschwenkt werden, dass sie zur Verriegelung des Hydraulikzylinders mit diesem Fuß die Kolbenstange übergreift. In dieser Position stützt sie sich am entsprechenden Ende des Hubzylinders ab.

Die Erfindung ist nicht auf die angegebene Kombination der Merkmale des unabhängigen Patentanspruchs 1 und der abhängigen Patentansprüche beschränkt. Es ergeben sich darüber hinaus Möglichkeiten, einzelne Merkmale, auch soweit sie aus den Patentansprüchen, der nachfolgenden Beschreibung der Ausführungsbeispiele oder unmittelbar aus der Zeichnung hervorgehen, miteinander zu kombinieren. Die Bezugnahme der Ansprüche auf die Zeichnung durch die Verwendung von Bezugszeichen soll den Schutzumfang der Patentansprüche nicht auf die dargestellten Ausgestaltungsbeispiele beschränken.

Vorteilhafterweise kann die als Hohlprofil ausgeführte Schutzeinrichtung auf ihrer dem Hubzylinders zugewandten Seite einen zumindest abschnittsweise umlaufenden Befestigungsabschnitt aufweisen, der der Aufnahme zumindest eines Abstreifelementes dient. Das zumindest eine Abstreifelement verhindert das Eindringen und Ablagern von groben Erntegutbestandteilen, wie beispielsweise Lieschenblättern, in das Innere der Schutzeinrichtung.

Hierzu kann das Abstreifelement als eine Bürste ausgeführt sein und sich in Richtung der Kolbenstange erstrecken. So kann an den einander zugewandten Schenkeln des U-förmigen Hohlprofiles jeweils eine Bürste angeordnet sein, die das Eintreten von Erntegutbestandteilen in das Innere verhindern, ohne dass es bei einem Einfahren der Kolbenstange in den Hubzylinder zu einer Behinderung des Bewegungsablaufes kommt.

Alternativ kann das Abstreifelement als ein flächiges Kunststoffelement ausgeführt sein und sich in Richtung der Kolbenstange erstrecken. Hierbei kann das Abstreifelement als Gummilippe ausgebildet sein, die im Bereich der Kolbenstange geschlitzt ausgeführt ist, um den ungehinderten Bewegungsablauf bei einem Einfahren der Kolbenstange in den Hubzylinder zu gewährleisten, und sich im übrigen abschnittsweise überlappt.

Weitere Merkmale der Erfindung ergeben sich im Übrigen aus der nachfolgenden Beschreibung und aus der Zeichnung, in der zwei Ausführungsbeispiele der Erfindung vereinfacht dargestellt sind. Es zeigen:
- Figur 1: in Seitenansicht einen Schrägförderer mit einer Teilansicht eines daran befestigten Vorsatzgerätes,
- Figur 2: eine perspektivische Darstellung der in Figur 1 gezeigten Anordnung eines Vorsatzgerätes an einem Schrägförderer, ebenfalls als Teilansicht und
- Figur 3: eine perspektivische Darstellung einer aus einem Vorsatzgerät und einem Schrägförderer bestehenden Einheit, ebenfalls als Teilansicht der Bauelemente, wobei eine gegenüber den Figuren 1 und 2 geänderte Anordnung einer erfindungsgemäßen Schutzeinrichtung vorgesehen ist;
- Fig. 4: eine perspektivische Darstellung einer Ausführungsform der an einer Sicherheitsstütze angeordneten Schutzeinrichtung.

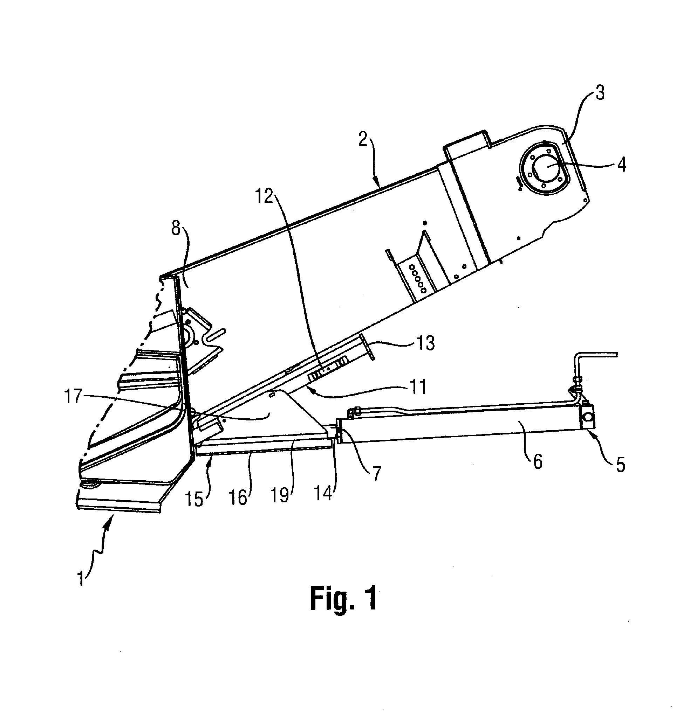

In den Figuren 1 bis 3 ist mit 1 ein als Getreideschneidwerk ausgebildetes Vorsatzgerät bezeichnet, das an einen Schrägförderer 2 angekuppelt ist. Wie aus der Figur 1 hervorgeht, weist der Schrägförderer 2 an einem ersten Ende 3 eine horizontale Schwenkachse 4 auf, über die die aus dem Schrägförderer 2 und dem Vorsatzgerät 1 bestehende Einheit schwenkbar an einer nicht näher dargestellten Erntemaschine geführt ist. Diese Schwenkbewegung, die zu einem Anheben oder Absenken des Vorsatzgerätes 1 führt, wird von einem Hydraulikzylinder 5 auf den Schrägförderer 2 übertragen. Dieser einfach wirkende Hydraulikzylinder 5 besteht aus einem Hubzylinder 6, der an einem nicht näher dargestellten Fahrgestell der Erntemaschine abgestützt ist, und aus einer Kolbenstange 7.

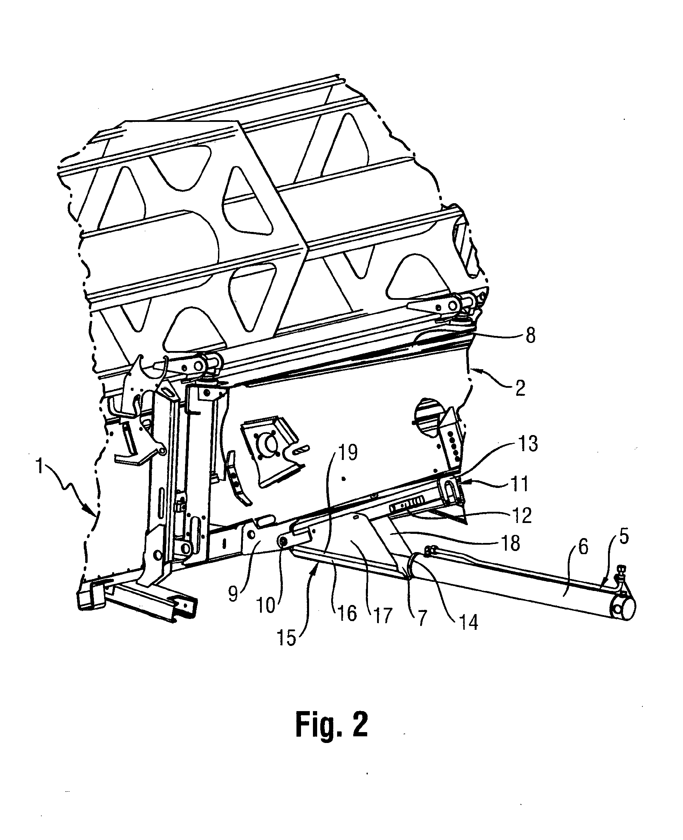

Wie insbesondere aus der Figur 2 hervorgeht, weist der Schrägförderer 2 an einem zweiten Ende 8, über welches er an das Vorsatzgerät 1 gekuppelt ist, ein für diesen Zweck vorgesehenes Rahmenteil 9 auf. Die Kolbenstange 7 ist, wie ebenfalls der Figur 2 entnommen werden kann, über einen Lagerbolzen 10 an dem Rahmenteil 9 befestigt. Dieser Lagerbolzen 10 dient gleichzeitig zur schwenkbeweglichen Anlenkung einer Sicherheitsstütze 11, die in der in den Figuren 1 und 2 dargestellten Stellung mittels einer Arretiervorrichtung 12 am Schrägförderer 2 fixiert ist. Nach einem Lösen dieser Arretiervorrichtung 12 lässt sich die Sicherheitsstütze 11 soweit verschwenken, dass ein gabelförmig ausgebildeter Fuß 13 der Sicherheitsstütze 11 die Kolbenstange 7 übergreift.

Die Sicherheitsstütze 11 übernimmt eine Sicherheitsfunktion, wenn Reparatur- oder Wartungsarbeiten am Schrägförderer 2 durchgeführt werden sollen. Falls während dieser Arbeiten ein Druckverlust im Hydraulikzylinder auftreten sollte, der unter Umständen durch eine Leckage an einem dem Hydraulikzylinder zugeordneten Steuerventil auftritt und zu einem Absenken des Vorsatzgerätes 1 zusammen mit dem Schrägförderer 2 führen würde, so blockiert die Sicherheitsstütze 11 diese Bewegung. Der gabelförmige Fuß 13 stützt sich in diesem Fall an einem Kopfstück 14 des Hubzylinders 6, in welchem im Übrigen ein nicht näher dargestellter Dichtring angeordnet ist, ab.

Wie aus den Figuren 1 und 2 hervorgeht, ist an der Sicherheitsstütze 11 eine als U-förmiges Hohlprofil ausgebildete Schutzeinrichtung 15 befestigt. Diese Schutzeinrichtung weist einen Boden 16 und Seitenwände 17 und 18 auf. Dabei sind die Seitenwände 17 und 18 mit im Wesentlichen dreieckiger Außenkontur gestaltet und jeweils mit einer Versteifungssicke 19 versehen. Wie den Figuren 1 und 2 entnommen werden kann, schirmt diese Schutzeinrichtung 15 die Kolbenstange 7 nach unten und zu den Seiten hin wirksam ab, so dass eine Benetzung der Kolbenstange 7 mit dem stärkehaltigen Saft des gemähten oder aufgenommenen Erntegutes wirksam vermieden werden kann. In den Bereichen der Öffnungen können an den Seitenwänden 17 und 18 Abstreifer angeordnet sein, die das Eindringen von Pflanzenpartikeln in die Schutzeinrichtung verhindern. Alternativ kann die Schutzeinrichtung 15 als ein L-förmiges Profil ausgeführt sein, welches die Kolbenstange 7 nur zu einer Seite sowie nach unten abschirmt. Diese Ausführung ist insofern vorteilhaft, als dass Pflanzenpartikel, die sich im Inneren der Schutzeinrichtung 15 ablagern können, seitlich herausfallen können beziehungsweise auf Grund der seitlichen Zugänglichkeit auf einfache Weise entfernbar sind.

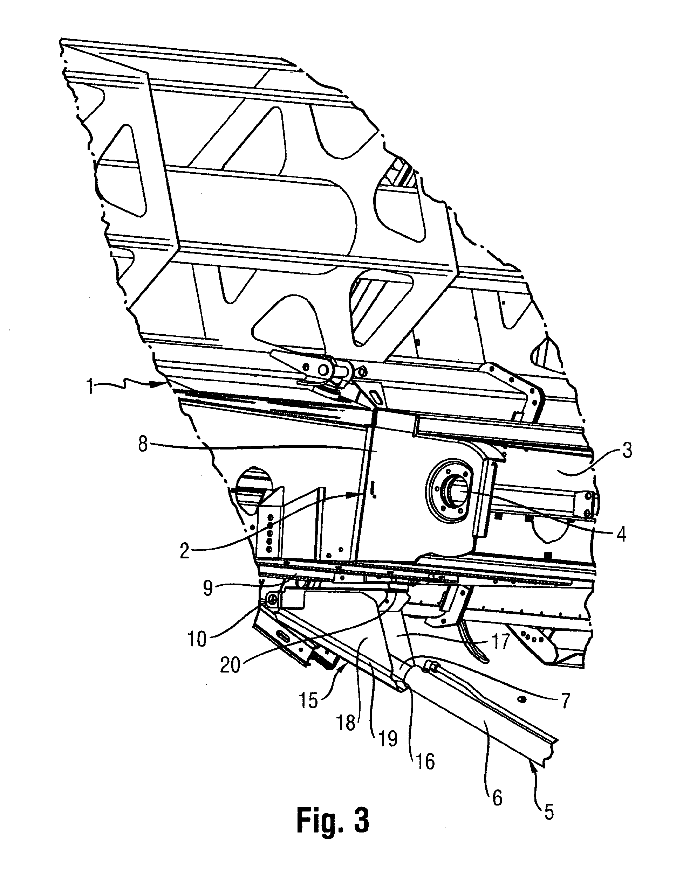

Nach der Figur 3 ist eine Ausbildung der aus Vorsatzgerät 1 und Schrägförderer 2 gebildeten Einheit vorgesehen, bei der im Gegensatz zu dem Ausführungsbeispiel nach den Figuren 1 und 2 keine Sicherheitsstütze verwendet wird. In diesem Fall ist die im Wesentlichen identisch ausgebildete Schutzeinrichtung 15 mit einem Anschlagprofil 20 verschraubt, wobei dieses Anschlagprofil 20 an dem Rahmenteil 9 des Schrägförderers 2 befestigt ist.

Den Figuren 1 bis 3 kann somit eine erfindungsgemäße Anordnung entnommen werden, mit welcher eine Verschmutzung der Mantelfläche der Kolbenstange 7 und daraus resultierende Undichtigkeiten des Hydraulikzylinders 5 vermieden werden können. Die bei den beiden Ausführungsformen verwendete Schutzeinrichtung 15 umschließt das Ende der Kolbenstange 7 und schirmt dieses somit gegenüber den Einflüssen durch stärkehaltige Pflanzensäfte und Pflanzenpartikel ab.

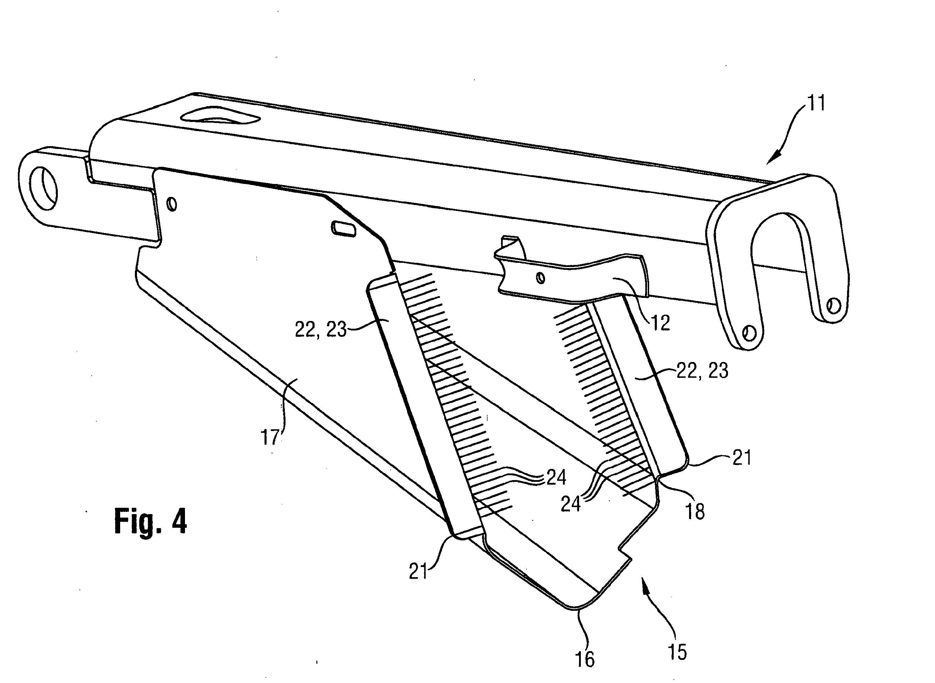

Fig. 4 zeigt eine perspektivische Darstellung einer Ausführungsform der an der Sicherheitsstütze 11 angeordneten Schutzeinrichtung 15. Die als U-förmiges Hohlprofil ausgebildete Schutzeinrichtung 15 weist auf ihrer dem Lagerbolzen 10 abgewandten Seite einen zumindest abschnittsweise umlaufenden Flansch 21 aufweist, der der Aufnahme zumindest eines Abstreifelementes 22 dient. In dem dargestellten Ausführungsbeispiel erstreckt sich der Flansch 21 jeweils im Wesentlichen über die Ausdehnung der Seitenwände 17, 18. Es kann jedoch vorteilhaft sein, den Flansch 21 über den gesamten Umfang der U-förmigen Schutzeinrichtung 15 zu erstrecken. Das Abstreifelement 22 ist in dem dargestellten Ausführungsbeispiel als zumindest eine Bürste 23 ausgeführt, die an dem jeweiligen Flansch 21 lösbar befestigbar ist. An der Bürste 23 angeordnete Borsten 24 erstrecken sich zumindest soweit in das Innere der Schutzeinrichtung 15, dass die Mantelfläche der Kolbenstange 7 zumindest teilweise von den Borsten 24 berührt wird. Die Länge der Borsten 24 kann auch derart gewählt sein, dass die Öffnung der Schutzeinrichtung 15 im Wesentlichen verschlossen ist. Alternativ kann anstelle einer oder mehrerer Bürsten 23 ein Abstreifelement 22 aus Kunststoff zum Einsatz kommen. Hierzu können die einander gegenüberliegend angeordneten Abstreifelemente 22 als Dichtlippen ausgeführt sein, deren einander zugewandten Stirnflächen aneinander anliegen, um die Öffnung der Schutzeinrichtung 15 weitgehend zu verschließen. Zugleich umschließen die Dichtlippen die Kolbenstange 7, wodurch das Eindringen von Pflanzenpartikel in das Innere der Schutzeinrichtung 15 verhindert wird. Auch die als Dichtlippen ausgeführten Abstreifelemente 22 sind lösbar an den Flanschen 21 befestigt, um diese bei Bedarf austauschen zu können.

### Bezugszeichenliste

- 1: Vorsatzgerät
- 2: Schrägförderer
- 3: erstes Ende von 2
- 4: horizontale Schwenkachse
- 5: Hydraulikzylinder
- 6: Hubzylinder
- 7: Kolbenstange
- 8: zweites Ende von 2
- 9: Rahmenteil
- 10: Lagerbolzen
- 11: Sicherheitsstütze
- 12: Arretiervorrichtung
- 13: gabelförmiger Fuß
- 14: Kopfstück
- 15: Schutzeinrichtung
- 16: Boden
- 17: Seitenwand
- 18: Seitenwand
- 19: Versteifungssicke
- 20: Anschlagprofil
- 21: Flansch
- 22: Abstreifelement
- 23: Bürste
- 24: Borsten

## Patentansprüche

1. Selbstfahrende Erntemaschine mit einem Vorsatzgerät (1), vorzugsweise in Form eines Getreideschneidwerks oder Maispflückers, das über zumindest einen Hydraulikzylinder (5) gegenüber einem Fahrgestell der Erntemaschine anhebbar und absenkbar ist und an das sich ein das Erntegut einem Dreschwerk oder einer Häckseltrommel zuführender Schrägförderer (2) anschließt, wobei der Schrägförderer (2) an einem ersten Ende (3) über eine horizontale Schwenkachse (4) gemeinsam mit dem Vorsatzgerät (1) schwenkbar an der Erntemaschine geführt ist und wobei der Hydraulikzylinder (5) einen Hubzylinder (6) und eine gegenüber diesem in axialer Richtung verschiebbare Kolbenstange (7) aufweist, die an ihrer Außenmantelfläche gleitend in einer Dichtung des Hubzylinders (6) geführt ist, **dadurch gekennzeichnet, dass** eine den Hydraulikzylinder (5) zumindest auf seiner dem Boden zugewandten Seite abdeckende, als Profil ausgebildete Schutzeinrichtung (15) am zweiten Ende (8) des Schrägförderers (2) oder an einer Rückwand des Vorsatzgerätes (1) mittelbar oder unmittelbar befestigt ist, in deren Innerem der Hydraulikzylinder (5) eine Schwenkbewegung ausführen kann.

2. Selbstfahrende Erntemaschine nach Anspruch 1, **dadurch gekennzeichnet, dass** die Schutzeinrichtung (15) an einem Rahmenteil (9), über das der Schrägförderer (2) mit dem Vorsatzgerät (1) kuppelbar ist, befestigt ist.

3. Selbstfahrende Erntemaschine nach einem der Ansprüche 1 oder 2, **dadurch gekennzeichnet, dass** das Profil als ein L-förmiges Profil ausgeführt ist.

4. Selbstfahrende Erntemaschine nach einem der Ansprüche 1 oder 2, **dadurch gekennzeichnet, dass** das Profil als ein Hohlprofil ausgeführt ist.

5. Selbstfahrende Erntemaschine nach einem der Ansprüche 1 bis 4, **dadurch gekennzeichnet, dass** die Schutzeinrichtung (15) die Kolbenstange (7) über eine Länge abdeckt, um die die Kolbenstange (7) während des Erntevorgangs über den Hubzylinder (6) vorsteht.

6. Selbstfahrende Erntemaschine nach einem der Ansprüche 1 bis 4, **dadurch gekennzeichnet, dass** die Schutzeinrichtung (15) den Hydraulikzylinder (5) im Wesentlichen über die Länge der maximal ausgefahrenen Kolbenstange (7) übergreift.

7. Selbstfahrende Erntemaschine nach Anspruch 4, **dadurch gekennzeichnet, dass** ein Abstand zwischen Seitenwänden (17 und 18) des Hohlprofils der Schutzeinrichtung (15) größer oder gleich einem Außendurchmesser des Hubzylinders (6) ist.

8. Selbstfahrende Erntemaschine nach Anspruch 4, **dadurch gekennzeichnet, dass** die Schutzeinrichtung (15) als U-förmiges Hohlprofil mit einem Boden (16) und Seitenwänden (17 und 18) ausgebildet ist, wobei der Boden (16) im montierten Zustand der Schutzeinrichtung (15) nach unten gerichtet ist und bei abgesenktem Vorsatzgerät (1) im Wesentlichen parallel zur Kolbenstange (7) verläuft.

9. Selbstfahrende Erntemaschine nach Anspruch 8, **dadurch gekennzeichnet, dass** die Seitenwände (17, 18) Versteifungssicken (19) aufweisen.

10. Selbstfahrende Erntemaschine nach Anspruch 8, **dadurch gekennzeichnet, dass** die Seitenwände (17 und 18) des Hohlprofils der Schutzeinrichtung (15) mit im Wesentlichen dreieckiger Kontur ausgebildet sind.

11. Selbstfahrende Erntemaschine nach Anspruch 1, **dadurch gekennzeichnet, dass** an einem Schwenklager (10), über das die Kolbenstange (7) an einem Rahmenteil (9) angreift, eine ebenfalls schwenkbare Sicherheitsstütze (11) geführt ist, die an der Rückwand des Vorsatzgerätes (1) festlegbar ist, und dass die Schutzeinrichtung (15) an der Sicherheitsstütze (11) befestigt ist.

12. Selbstfahrende Erntemaschine nach Anspruch 11, **dadurch gekennzeichnet, dass** die Sicherheitsstütze (11) einen gabelförmigen Fuß (13) aufweist, der im entriegelten Zustand der Sicherheitsstütze (11) die Kolbenstange (7) zur Arretierung des Hydraulikzylinders (5) in einer angehobenen Position des Schrägförderers (2) bzw. Vorsatzgerätes (1) übergreift.

13. Selbstfahrende Erntemaschine nach einem der Ansprüche 4 bis 12, **dadurch gekennzeichnet, dass** die als Hohlprofil ausgeführte Schutzeinrichtung (15) auf ihrer dem Hubzylinders (6) zugewandten Seite einen zumindest abschnittsweise umlaufenden Flansch (21) aufweist, der der Aufnahme zumindest eines Abstreifelementes (22) dient.

14. Selbstfahrende Erntemaschine nach Anspruch 13, **dadurch gekennzeichnet, dass** das Abstreifelement (22) als zumindest eine Bürste ausgeführt ist und sich in Richtung der Kolbenstange (7) erstreckt.

15. Selbstfahrende Erntemaschine nach Anspruch 13, **dadurch gekennzeichnet, dass** das Abstreifelement (22) als zumindest ein Kunststoffelement ausgeführt ist und sich in Richtung der Kolbenstange (7) erstreckt.

## Claims

1. A self-propelled harvester comprising a front-mounted attachment (1), preferably in the form of a grain cutting mechanism or corn plucker, which can be raised and lowered by way of at least one hydraulic cylinder (5) relative to a chassis of the harvester and to which is connected an inclined conveyor (2) feeding the crop material to a threshing mechanism or a chopping drum, wherein at a first end (3) the inclined conveyor (2) is guided pivotably on the harvester by way of a horizontal pivot axis (4) jointly with the front-mounted attachment (1) and wherein the hydraulic cylinder (5) has a stroke cylinder (6) and a piston rod (7) which is displaceable in the axial direction relative thereto and which is guided slidingly at its outside peripheral surface in a seal in the stroke cylinder (6), **characterised in that** a protection device (15) which is in the form of a profile member and which covers the hydraulic cylinder (5) at least on its side towards the ground is directly or indirectly fixed to the second end (8) of the inclined conveyor (2) or to a rear wall of the front-mounted attachment (1) and in the interior of which the hydraulic cylinder (5) can perform a pivotal movement.

2. A self-propelled harvester according to claim 1 **characterised in that** the protection device (15) is fixed to a frame member (9), by way of which the inclined conveyor (2) can be coupled to the front-mounted attachment (1).

3. A self-propelled harvester according to one of claims 1 and 2 **characterised in that** the profile member is in the form of an L-shaped profile member.

4. A self-propelled harvester according to one of claims 1 and 2 **characterised in that** the profile member is in the form of a hollow profile member.

5. A self-propelled harvester according to one of claims 1 to 4 **characterised in that** the protection device (15) covers the piston rod (7) over a length by which the piston rod (7) projects beyond the stroke cylinder (6) during the harvesting operation.

6. A self-propelled harvester according to one of claims 1 to 4 **characterised in that** the protection device (15) engages over the hydraulic cylinder (5) substantially over the length of the piston rod (7) when at maximum extension.

7. A self-propelled harvester according to claim 4 **characterised in that** a spacing between side walls (17 and 18) of the hollow profile of the protection device (15) is greater than or equal to an outside diameter of the stroke cylinder (6).

8. A self-propelled harvester according to claim 4 **characterised in that** the protection device (15) is in the form of a U-shaped hollow profile member having a bottom (16) and side walls (17 and 18), wherein the bottom (16) in the assembled condition of the protection device (15) is directed downwardly and when the front-mounted attachment (1) is lowered extends substantially parallel to the piston rod (7).

9. A self-propelled harvester according to claim 8 **characterised in that** the side walls (17, 18) have stiffening beads (19).

10. A self-propelled harvester according to claim 8 **characterised in that** the side walls (17 and 18) of the hollow profile member of the protection device (15) are formed with a substantially triangular contour.

11. A self-propelled harvester according to claim 1 **characterised in that** guided on a pivot mounting (10) by way of which the piston rod (7) engages a frame member (9) is a safety support (11) which is also pivotable and which can be fixed at the rear wall of the front-mounted attachment (1) and that the protection device (15) is fixed to the safety support (11).

12. A self-propelled harvester according to claim 11 **characterised in that** the safety support (11) has a forked base (13) which in the unlocked condition of the safety support (11) engages over the piston rod (7) to arrest the hydraulic cylinder (5) in a raised position of the inclined conveyor (2) or the front-mounted attachment (1).

13. A self-propelled harvester according to one of claims 4 to 12 **characterised in that** the protection device (15) which is in the form of a hollow profile member has on its side towards the stroke cylinder (6) a flange (21) which extends at least portion-wise peripherally and which serves to receive at least one stripping element (22).

14. A self-propelled harvester according to claim 13 **characterised in that** the stripping element (22) is in the form of at least one brush and extends in the direction of the piston rod (7).

15. A self-propelled harvester according to claim 13 **characterised in that** the stripping element (22) is in the form of at least one plastic element and extends in the direction of the piston rod (7).

## Revendications

1. Machine de récolte automotrice pourvue d'un outil frontal (1), de préférence sous la forme d'un tablier de coupe pour céréales ou d'un cueilleur de maïs, qui peut être levé et abaissé par rapport à un châssis de la machine de récolte au moyen d'au moins un vérin hydraulique (5) et auquel se raccorde un convoyeur incliné (2) qui amène le produit de récolte à un système de battage ou à un tambour hacheur, le convoyeur incliné (2) étant, conjointement avec l'outil frontal (1), guidé à pivotement sur la machine de récolte, à une première extrémité (3) par un axe de pivotement horizontal (4), et le vérin hydraulique (5) comportant un cylindre de levage (6) et une tige de piston (7) qui est apte à coulisser en direction axiale par rapport à celui-ci et qui est guidée en glissement par sa surface d'enveloppe extérieure dans un joint du cylindre de levage (6), **caractérisée en ce qu'**un dispositif de protection (15), qui est réalisé sous la forme d'un profilé, qui recouvre le vérin hydraulique (5) au moins de son côté tourné vers le fond et à l'intérieur duquel le vérin hydraulique (5) peut effectuer un mouvement pivotant, est fixé de manière indirecte ou directe à la deuxième extrémité (8) du convoyeur incliné (2) ou à une paroi arrière de l'outil frontal (1).

2. Machine de récolte automotrice selon la revendication 1, **caractérisée en ce que** le dispositif de protection (15) est fixé à une partie de cadre (9) par laquelle le convoyeur incliné (2) peut être couplé à l'outil frontal (1).

3. Machine de récolte automotrice selon une des revendications 1 ou 2, **caractérisée en ce que** le profilé est réalisé sous la forme d'un profilé en L.

4. Machine de récolte automotrice selon une des revendications 1 ou 2, **caractérisée en ce que** le profilé est réalisé sous la forme d'un profilé creux.

5. Machine de récolte automotrice selon une des revendications 1 à 4, **caractérisée en ce que** le dispositif de protection (15) recouvre la tige de piston (7) sur une longueur dont la tige de piston (7) dépasse du cylindre de levage (6) pendant l'opération de récolte.

6. Machine de récolte automotrice selon une des revendications 1 à 4, **caractérisée en ce que** le dispositif de protection (15) vient en prise sur le vérin hydraulique (5) sensiblement sur la longueur de la tige de piston (7) sortie au maximum.

7. Machine de récolte automotrice selon la revendication 4, **caractérisée en ce qu'**une distance entre des parois latérales (17 et 18) du profilé creux du dispositif de protection (15) est supérieure ou égale à un diamètre extérieur du cylindre de levage (6).

8. Machine de récolte automotrice selon la revendication 4, **caractérisée en ce que** le dispositif de protection (15) est réalisé sous la forme d'un profilé creux en U avec un fond (16) et des parois latérales (17 et 18), le fond (16) étant dirigé vers le bas à l'état monté du dispositif de protection (15) et s'étendant sensiblement parallèlement à la tige de piston (7) quand l'outil frontal (1) est abaissé.

9. Machine de récolte automotrice selon la revendication 8, **caractérisée en ce que** les parois latérales (17, 18) présentent des nervures de renfort (19).

10. Machine de récolte automotrice selon la revendication 8, **caractérisée en ce que** les parois latérales (17 et 18) du profilé creux du dispositif de protection (15) sont réalisées avec un contour sensiblement triangulaire.

11. Machine de récolte automotrice selon la revendication 1, **caractérisée en ce que** sur un palier de pivotement (10), par lequel la tige de piston (7) agit sur une partie de cadre (9), est guidé un support de sécurité (11) lui aussi pivotant qui peut être fixé à la paroi arrière de l'outil frontal (1), et **en ce que** le dispositif de protection (15) est fixé au support de sécurité (11).

12. Machine de récolte automotrice selon la revendication 11, **caractérisée en ce que** le support de sécurité (11) présente un pied fourchu (13) qui, à l'état déverrouillé du support de sécurité (11), vient en prise sur la tige de piston (7) pour arrêter le vérin hydraulique (5) dans une position levée du convoyeur incliné (2), respectivement de l'outil frontal (1).

13. Machine de récolte automotrice selon une des revendications 4 à 12, **caractérisée en ce que** le dispositif de protection (15) réalisé sous la forme d'un profilé creux présente, sur son côté tourné vers le cylindre de levage (6), une bride (21) au moins en partie périphérique qui sert à recevoir au moins un élément racleur (22).

14. Machine de récolte automotrice selon la revendication 13, **caractérisée en ce que** l'élément racleur (22) est réalisé sous la forme d'au moins une brosse et s'étend dans la direction de la tige de piston (7).

15. Machine de récolte automotrice selon la revendication 13, **caractérisée en ce que** l'élément racleur (22) est réalisé sous la forme d'au moins un élément en matière plastique et s'étend dans la direction de la tige de piston (7).
